# EUROPÄISCHE PATENTSCHRIFT

(11) **EP 3 694 381 B1**
(45) Veröffentlichungstag und Bekanntmachung des Hinweises auf die Patenterteilung: **11.03.2026**
(21) Anmeldenummer: 18782918.9
(22) Anmeldetag: 27.09.2018
(51) Int. Cl.: A47J 31/44

(54) **VORRICHTUNG ZUM ERZEUGEN VON MILCHSCHAUM**
DEVICE FOR PRODUCING MILK FROTH
DISPOSITIF DE CRÉATION DE MOUSSE DE LAIT

(30) Priorität: 11.10.2017 DE 102017123642
(43) Veröffentlichungstag der Anmeldung: 19.08.2020
(73) Patentinhaber: FRANKE Kaffeemaschinen AG, 4663 Aarburg (CH)
(72) Erfinder: VETTERLI, Heinz, 8855 Wangen (CH); TURI, Mariano, 8046 Zürich (CH); MÜLLER, Simon, 5037 Muhen (CH)
(74) Vertreter: LBP Lemcke, Brommer & Partner Patentanwälte mbB
(86) Internationale Anmeldenummer: PCT/EP2018/076342
(87) Internationale Veröffentlichungsnummer: WO 2019/072583

(56) Entgegenhaltungen:
- EP-A1- 2 583 596
- EP-A1- 3 066 964
- WO-A1-2011/105943
- WO-A1-2013/064232
- US-A1- 2014 050 466

## Beschreibung

Die vorliegende Erfindung betrifft eine Vorrichtung zum Erzeugen von Milchschaum mit einer Pumpe zum Fördern von Milch über eine Milchleitung aus einem Vorratsbehälter, einem saugseitig der Pumpe in die Milchleitung einmündenden Lufteinlass, einem druckseitig der Pumpe angeordneten Druckerhöhungselement und einem in Flussrichtung hinter dem Druckerhöhungselement angeordneten Durchlauferhitzer zum Erwärmen eines von der Pumpe geförderten Milch-/Luftgemischs.

Eine solche Vorrichtung ist beispielsweise aus der EP 3 023 037 A1 bekannt. Als Druckerhöhungselement dient hier ein Mischelement, insbesondere ein Wendelmischer. Die Erwärmung des von der Pumpe geförderten Milch-/Luftgemischs erfolgt in einem Thermoblock, der zur Ausgabe von kaltem Milchschaum wahlweise über eine Bypassleitung umgangen werden kann. Milchschaum kann also wahlweise warm oder kalt ausgegeben werden. Eine Einstellung der Ausgabetemperatur von warmem Milchschaum ist hierbei jedoch nicht vorgesehen.

In der Schrift EP 2 583 596 A1 wird ebenfalls eine Vorrichtung der eingangs genannten Art beschrieben, mit der wahlweise Milch oder Milchschaum ausgegeben werden kann. Die Erwärmung eines angesaugten Milch-/Luftgemischs erfolgt in einem Thermoblock. Wahlweise kann in einer zweiten Stufe eine Nacherwärmung mittels Dampf erfolgen. Eine Regelung der Temperatur des Milchschaums kann über eine Einstellung der elektrischen Leistung des Durchlauferhitzers erfolgen. Aufgrund der hohen thermischen Masse typischerweise verwendeter Durchlauferhitzer ist eine Regelung jedoch sehr träge, sodass eine Einstellung der Temperatur nur langfristig erfolgen kann. Abgesehen von der Zuschaltung der Nacherhitzung mittels Dampf kann somit nicht für jeden einzelnen Produktbezug eine individuelle Temperatur des Milchschaums gewählt werden.

Es ist daher eine Aufgabe der vorliegenden Erfindung, bei der Ausgabe von Milchschaum die Einstellung der Temperatur des Milchschaums flexibler zu gestalten.

Die Aufgabe wird gelöst durch eine Vorrichtung mit den Merkmalen des Anspruchs 1. Vorteilhafte Ausgestaltungen sind den abhängigen Ansprüchen zu entnehmen.

Bei einer Vorrichtung der eingangs genannten Art ist erfindungsgemäß eine Steuerungseinrichtung vorgesehen, welche ausgebildet ist, eine Ausgabetemperatur des Milchschaums einzustellen, wobei die Einstellung der Ausgabetemperatur durch Einstellen der Förderleistung der Pumpe erfolgt.

Mit der Förderleistung der Pumpe können Fließgeschwindigkeit und Volumenstrom des von der Pumpe geförderten Milch-/Luftgemischs verändert werden. Bei gleicher elektrischer Heizleistung des Durchlauferhitzers ergibt sich bei verringertem Volumenstrom eine höhere Ausgangstemperatur und umgekehrt. Durch diese einfache Maßnahme lässt sich somit diese Ausgabetemperatur des Milchschaums einstellen.

Das erfindungsgemäße Prinzip zum Aufschäumen der Milch beruht jedoch darauf, dass saugseitig der Pumpe Luft in die Milchleitung eingeleitet wird und das angesaugte Milch-/Luftgemisch in der Milchpumpe zu einem Milchschaum verarbeitet wird. Dies erfordert jedoch nach Erkenntnissen des Anmelders einen hohen Arbeitsdruck im Inneren der Milchpumpe. Dieser wird einerseits durch die Förderleistung der Pumpe, andererseits durch das druckseitig der Pumpe angeordnete Druckerhöhungselement beeinflusst. Das Druckerhöhungselement wirkt sozusagen als Fließwiderstand in der Ausgangsleitung und erzeugt so einen Gegendruck in der Pumpe, gegen den die Pumpe arbeiten muss und dabei das kompressible Milch-/Luftgemisch im Pumpeninneren durchwälzt. Da somit die Konsistenz des erzeugten Milchschaums von der Förderleistung der Milchpumpe abhängt, besteht eine durchaus überraschende Erkenntnis des Anmelders darin, dass dennoch, ohne nennenswerten Einfluss auf die Milchschaumkonsistenz, die Pumpleistung in einem ausreichend großen Bereich variiert werden kann, um hierüber die Temperatur des Milchschaums einzustellen.

Außerdem ist mindestens ein Temperatursensor vorgesehen, der die Temperatur der angesaugten Milch oder des erwärmten Milch-/Luftgemischs misst. Wird eingangsseitig die Temperatur der kalten Milch gemessen, so kann hieraus und aus der bekannten Wärmekapazität von Milch sowie der Heizleistung des Durchlauferhitzers die zur Erreichung einer voreingestellten Temperatur erforderliche Pumpleistung der Pumpe ermittelt werden. Wird hingegen ausgangsseitig die Temperatur des erwärmten Milchluftgemischs gemessen, so kann diese direkt als Regelgröße zur Regelung der Förderleistung der Pumpe verwendet werden. Beide Maßnahmen, also eine "feedforward" und eine "feedback" Regelung können natürlich auch kombiniert werden.

Als Durchlauferhitzer kommt bei einer bevorzugten Ausführungsform der Erfindung ein schnell heizender Durchlauferhitzer mit niedriger thermischer Masse, eine sogenannte Heizpatrone, zum Einsatz. Diese erfasst einen sich symmetrisch entlang einer Längsachse erstreckenden, vorzugsweise zylindrischen Innenkörper, der eine Heizung aufweist, sowie eine den Innenkörper umgebende Außenhülle, wobei zwischen Innenkörper und Außenhülle ein wendelförmig um den Innenkörper umlaufender und von der Außenhülle begrenzter Strömungskanal für das durchströmende Milch-/Luftgemisch ausgebildet ist. Ein solcher Durchlauferhitzer muss, anders als bei herkömmlichen Thermoblöcken, nicht lange vorgeheizt und beständig auf derselben Temperatur gehalten werden. Die Vorwärmzeit bei Inbetriebnahme bis zum ersten Produktbezug ist somit niedrig. Nach Ende eines Produktbezugs oder nach zumindest nach einer vorgegebenen Leerlaufzeit ohne Produktbezug kann die Temperatur durch Reduktion des Heizstroms abgesenkt und beim nächsten Produktbezug wieder auf die gewünschte Endtemperatur erhöht werden. Wird eine vorgegebene Leerlaufzeit ohne Produktbezug überschritten, so kann der Durchlauferhitzer auch ganz abgeschaltet werden. Ein zur Verwendung mit der Erfindung geeigneter Durchlauferhitzer ist insbesondere in der (nicht vorveröffentlichten) Patentanmeldung DE 10 2017 100 154 der Anmelderin beschrieben, auf die hier zur Vermeidung unnötiger Wiederholungen vollinhaltlich Bezug genommen wird.

Das Einstellen der Förderleistung der Pumpe erfolgt zweckmäßigerweise durch Regelung der Pumpendrehzahl, insbesondere mittels Phasenanschnittsteuerung.

Zur Volumenbestimmung der von der Pumpe angesaugten Milch kann saugseitig der Pumpe ein Durchflussmesser angeordnet sein. Dieser kann einerseits dazu dienen, die Milch bzw. den von der Pumpe erzeugten Milchschaum zu portionieren, kann aber im Rahmen der vorliegenden Erfindung insbesondere dazu verwendet werden, die Durchflussrate der Milch zu bestimmen und in Abhängigkeit davon und von der der voreingestellten Milchschaumtemperatur die Förderleistung der Pumpe zu regeln.

Besonders standfester und cremiger Milchschaum kann durch die Verwendung einer Zahnradpumpe als Milchpumpe erzeugt werden, die im Rahmen der vorliegenden Erfindung bevorzugt eingesetzt wird. Die gegen den von dem Druckerhöhungselement erzeugten Innendruck anarbeitenden Zahnräder einer Zahnradpumpe bewirken eine besonders intensive Durchmischung und feine Verteilung der Luftbläschen im angesaugten Milchluftgemisch. Der von der Pumpe am druckseitigen Ausgang erzeugte Pumpendruck beträgt vorzugsweise zwischen 5 und 15, insbesondere zwischen 8 und 12 bar. In diesem Druckbereich wird nach Untersuchungen der Anmelderin ein von der Konsistenz, Standfestigkeit und Cremigkeit hervorragender Milchschaum erhalten.

Als Druckerhöhungs- bzw. Gegendruckelement kann vorzugsweise ein Mischelement, insbesondere ein Wendelmischer, eingesetzt werden. Ein solcher ist in der eingangs genannten europäischen Patentanmeldung EP 3 023 037 A1 beschrieben, auf die zur Vermeidung unnötiger Wiederholungen hiermit vollinhaltlich Bezug genommen wird. Alternativ kann als Druckerhöhungselement jedoch auch ein Widerstandsdurchlasselement eingesetzt werden, was aus einer Vielzahl labyrinthartig verzweigter Strömungswege gebildet wird. Ein solches Widerstandsdurchlasselement ist beispielsweise in der Schrift EP 0 626 148 A1 beschrieben. Ebenso ist es möglich, als Druckerhöhungselement eine Drossel in Form einer in der Auslassleitung angeordneten Blende zu verwenden, wie dies beispielsweise in der Schrift WO 2008/083941 A1 beschrieben ist.

Wesentlich ist hierbei, dass das Druckerhöhungselement so ausgelegt und dimensioniert ist, dass es am Ausgang der Milchpumpe einen ausreichend hohen Gegendruck erzeugt, gegen den die Milchpumpe arbeiten muss.

Neben einer Einstellung der Förderleistung der Milchpumpe ist im Rahmen der vorliegenden Erfindung vorzugsweise außerdem vorgesehen, dass in Abhängigkeit der eingestellten Förderleistung auch die über den Lufteinlass angesaugte Luftmenge reguliert wird. Dies erfolgt über ein am Lufteinlass vorgesehenes einstellbares Luftventil.

Als Luftventil kann z.B. ein Stetigventil dienen, mit dem sich die Einlassöffnung verengen lässt, um die Luftzufuhr zu drosseln. Bei einer besonders bevorzugten Ausführungsform der vorliegenden Erfindung ist der Lufteinlass jedoch mit einem intermittierenden Luftventil, also einem in schneller Folge öffnenden und schließenden Magnetventil versehen. Durch eine getaktete Ansteuerung des Luftventils wird der von der Pumpe angesaugte Luftstrom immer wieder kurzzeitig unterbrochen. Hierdurch kann einerseits die in die Milch angesaugte Luftmenge dosiert werden, andererseits führt nach Erkenntnissen des Anmelders der getaktete Betrieb des Luftventils zu einer weiteren Verbesserung der Milchschaumkonsistenz im Hinblick auf Cremigkeit und Standfestigkeit. Die Taktfrequenz, mit der das Luftventil angesteuert wird, liegt bevorzugt zwischen 5 und 20 Hz, insbesondere bei etwa 10 Hz. Zum Einstellen der von der Pumpe angesaugten Luftmenge kann die Taktrate, vorzugsweise jedoch insbesondere das Tastverhältnis bei der Ansteuerung des intermittierenden Luftventils, verändert werden.

Im Rahmen der vorliegenden Erfindung ergibt sich durch die Verwendung eines einstellbaren Luftventils nicht nur eine Verbesserung der Milchschaumeigenschaften und die Möglichkeit, die Milchschaumkonsistenz von flüssig bis steif zu variieren, sondern das Luftventil ermöglicht auch eine Anpassung des angesaugten Luftvolumens an die eingestellte Förderleistung der Pumpe. Wird beispielsweise die Förderleistung der Pumpe erhöht, um den Volumenstrom des Milch-/Luftgemischs zu erhöhen und damit die Temperatur des warmen Milchschaums zu verringern, so wird gleichzeitig durch entsprechende Ansteuerung des Luftventils die Luftzufuhr erhöht, sodass das Verhältnis von Milch zu Luft im Milchschaum in etwa konstant bleibt. Umgekehrt wird bei einer Verringerung der Förderleistung, die zu einer Erhöhung der Milchschaumtemperatur am Auslass führt, die Luftzufuhr gedrosselt, insbesondere indem das Tastverhältnis des intermittierenden Luftventils verringert wird, um so auch die angesaugte Luftmenge zu verringern. Auf diese Weise lässt sich trotz Variation der Förderleistung der Pumpe eine gleichbleibende Milchschaumkonsistenz und -qualität bei jeweils unterschiedlichen Milchschaumtemperaturen erreichen.

Bei einer weiteren bevorzugten Ausführungsform ist außerdem vorgesehen, dass mittels der Steuerung zur Ausgabe von kaltem Milchschaum der Durchlauferhitzer ausgeschaltet und zur Ausgabe von warmem Milchschaum eingeschaltet wird. Da als Durchlauferhitzer vorzugsweise eine Heizpatrone niedriger thermischer Masse eingesetzt wird, die schnell aufzuheizen und abzukühlen ist, kann für jeden Getränkebezug separat gewählt werden, ob der Milchschaum auf eine einstellbare Temperatur erwärmt oder als kalter Milchschaum ausgegeben werden soll. Somit wird eine Bypassleitung zur Umgehung des Durchlauferhitzers im Falle der Ausgabe von kaltem Milchschaum überflüssig.

Außerdem kann vorgesehen sein, dass der Durchlauferhitzer und zumindest ein Teil der daran angeschlossenen Milchleitung nach jedem Produktbezug oder nach einer vorgegebenen Zeitspanne, in der kein Milchschaum bezogen wurde, mit Wasser gespült wird. Ein solches Spülen kann mit warmem Wasser oder mit kaltem Wasser erfolgen. Zu diesem Zweck kann ein separates Heißwassersystem vorgesehen sein, mit dem Wasser für den Spülvorgang erwärmt und über ein Ventil der Milchleitung zugeführt wird. Das Heißwassersystem kann wie auch das Milchsystem mit einem separaten Durchlauferhitzer für Heißwasser ausgestattet sein, wobei auch der Durchlauferhitzer für Heißwasser ganz ähnlich dem Durchlauferhitzer für Milch als Heizpatrone mit niedriger thermischer Masse ausgeführt sein kann.

Die genannte Vorrichtung zur Erzeugung von Milchschaum wird vorzugsweise in einem Getränkeautomaten zur Ausgabe milchhaltiger Getränke eingesetzt, insbesondere in einem Kaffeevollautomaten zur Zubereitung und Ausgabe unterschiedlicher Kaffeegetränke und anderen Heißgetränken, wie etwa Latte Macchiato, Cappuccino, heißer Schokolade, etc..

Bei derartigen Getränkeautomaten wird der Vorratsbehälter für Milch vorzugsweise in einem separaten Kühlschrank untergebracht. Dieser kann beispielsweise als Beistellausgerät oder als Unterthekengerät ausgebildet sein. Ein solcher Kühlschrank ist üblicherweise mit einer eigenen Temperaturregelung ausgestattet und die Kühlschranktemperatur kann somit als Eingangstemperatur für die Regelung der Ausgabetemperatur des warmen Milchschaums angenommen werden. Somit kann auf eine zusätzliche Messung der Eingangstemperatur der kalten Milch verzichtet werden. Aufgrund der eingestellten Kühlschranktemperatur, der bekannten Wärmekapazität von Milch und der vorgegebenen gewünschten Ausgabetemperatur des warmen Milchschaums kann die Förderleistung der Milchpumpe entsprechend eingestellt werden.

Außerdem betrifft die Erfindung auch ein Verfahren zum Erzeugen von Milchschaum einstellbarer Temperatur, bei dem mittels einer Pumpe Milch über eine Milchleitung aus einem Vorratsbehälter gefördert wird, bei dem über einen saugseitig der Pumpe in die Milchleitung einmündenden Lufteinlass Luft beigemischt wird, bei dem über ein druckseitig der Pumpe angeordnetes Druckerhöhungselement ein Gegendruck am Ausgang der Pumpe erzeugt wird und bei dem in einem in Flussrichtung hinter dem Druckerhöhungselement angeordneten Durchlauferhitzer ein von der Pumpe gefördertes Milchluftgemisch erwärmt wird. Hierbei ist erfindungsgemäß vorgesehen, dass zur Einstellung der Ausgabetemperatur des Milchschaums die Förderleistung der Pumpe verändert wird.

Weitere Vorteile und Ausgestaltungen der Erfindung ergeben sich aus der nachfolgenden Beschreibung eines Ausführungsbeispiels anhand der Figuren. Hierbei zeigt:
- Figur 1: ein Flussschema einer Vorrichtung zur Milchschaumerzeugung und
- Figur 2: eine Seitenansicht des im Ausführungsbeispiel verwendeten Durchlauferhitzers mit geöffneter Außenhülle.

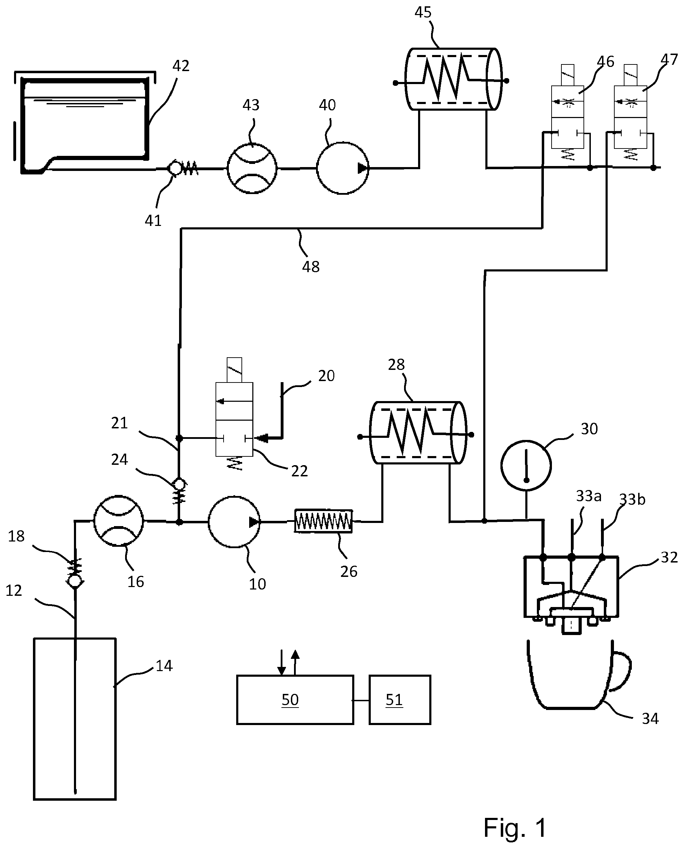

Das in Figur 1 dargestellte Diagramm zeigt ein sogenanntes "Wasserlaufschema" einer erfindungsgemäßen Vorrichtung zur Erzeugung und Ausgabe von geschäumter Milch. Die Vorrichtung besitzt eine Milchpumpe 10, die über eine Ansaugleitung 12 Milch aus einem Vorratsbehälter 14 ansaugt. In der Ansaugleitung 12 befindet sich in Flussrichtung vor der Milchpumpe 10 ein Durchflussmesser 16 sowie ein Rückschlagventil 18. Letzteres verhindert, dass Milch aus der Ansaugleitung zurück in den Vorratsbehälter 14 fließen kann. Zwischen der Milchpumpe 10 und dem Durchflussmesser 16 mündet ein Lufteinlass 20 über eine Lufteinlassleitung 21 in die Ansaugleitung 12. Am Lufteinlass 20 ist ein intermittierend betriebenes Luftventil 20 angeordnet, welches die Luftzufuhr zyklisch unterbricht bzw. freigibt. Außerdem befindet sich in der Luftzuleitung 21 ein Rückschlagventil 24, das ein Eindringen von Milch in die Luftzuleitung 21 verhindert.

Druckseitig der Milchpumpe 10, also in Strömungsrichtung hinter der Milchpumpe 10, befindet sich ein Druckerhöhungselement 26 in Form eines Wendelmischers. Ein Wendelmischer ist ein sogenannter statischer Mischer, bei dem in ein rohrförmiges Gehäuse mehrere hintereinander angeordnete, gegeneinander jeweils um 90° versetzte 180°-Wendel angeordnet sind. Außerdem haben die aufeinanderfolgenden Wendel jeweils eine gegenläufige Drehrichtung. Jeder Wendel teilt den Strom der durchströmenden Flüssigkeit in zwei Teilströme. Diese werden an jedem Übergang zum jeweils folgenden Wendel wiederum in zwei Teilströme aufgeteilt und jeweils mit Teilströmen aus dem vorangegangenen Wendel zusammengeführt. Auf diese Weise erfolgt eine Durchmischung des Flüssigkeitsstroms. Außerdem stellt der Wendelmischer einen weitgehend laminaren Strömungswiderstand dar, ohne dass hierbei der Durchflussquerschnitt verringert werden müsste.

Die Milchpumpe 10 ist als Zahnradpumpe ausgebildet und der Wendelmischer 26 dient dazu, am Ausgang der Pumpe 10 einen Gegendruck zu erzeugen. Aufgrund dieses Gegendruckes, gegen den die Zahnradpumpe 10 anarbeiten muss, wird das angesaugte Milch-/Luftgemisch gegen die Pumprichtung zwischen den Zahnrädern der Pumpe hindurchgepresst und auf diese Weise zu einem feinen Milchschaum verarbeitet.

In Flussrichtung hinter dem Wendelmischer 26 befindet sich ein Durchlauferhitzer 28, mit dem der aus dem Wendelmischer 26 austretende Milchschaum wahlweise erwärmt werden kann. Am Ausgang des Durchlauferhitzers 28 ist noch ein Temperatursensor 30 angeordnet, mit dem die Temperatur des erwärmten Milchschaums gemessen werden kann. Von dort gelangt der Milchschaum zu einem Auslaufkopf 32, von dem er in ein darunter platziertes Trinkgefäß 34 ausgegeben wird. Der Auslaufkopf 32 verfügt über zwei weitere Zuläufe 33a, 33b, die an eine hier nicht gezeigte Brühvorrichtung eines Kaffeevollautomaten und einen Zubereiter für Instantgetränke angeschlossen wird. Das gezeigte Milchsystem ist Teil eines Kaffeevollautomaten, mit dem wahlweise unterschiedliche Kaffee- und Instantgetränke zubereitet werden können.

Soll über das Milchsystem kein Milchschaum, sondern warme oder kalte Milch ausgegeben werden, so wird lediglich das Luftventil 22 geschlossen. Somit wird keine Luft mit angesaugt und es wird lediglich die aus dem Vorratsbehälter 14 geförderte Milch ausgegeben. Diese kann wahlweise durch Einschalten des Durchlauferhitzers 28 erwärmt oder als kalte Milch ausgegeben werden.

Neben dem eigentlichen Milchsystem zur Erzeugung von Milchschaum ist im Ausführungsbeispiel außerdem ein zusätzliches System zum Erzeugen von Heißwasser vorgesehen, mit dem das Milchsystem gespült werden kann oder mit dem Dampf erzeugt werden kann, der zur Nacherhitzung des warmen Milchschaums oder warmer Milch verwendet werden kann. Hierzu ist eine Wasserpumpe 40 vorgesehen, die eingangsseitig über ein Rückschlagventil 41 mit einem Wassertank 42 verbunden ist. Statt eines Wassertanks kann selbstverständlich auch ein Anschluss an eine Hauswasserleitung vorgesehen sein. Zwischen Durchschlagventil 41 und Wasserpumpe 40 ist außerdem ein Durchflussmesser 43 vorgesehen, mit dem die von der Wasserpumpe 40 angesaugte Wassermenge und eine Durchflussrate bestimmt werden kann. Druckseitig der Pumpe 40 ist ein Durchlauferhitzer 45 angeordnet, der ähnlich aufgebaut ist wie der Durchlauferhitzer 28 für Milch. Mit diesem Durchlauferhitzer 45 können wahlweise, je nach elektrischer Heizleistung, Heißwasser oder Wasserdampf erzeugt werden. In Flussrichtung hinter dem Durchlauferhitzer 45 befinden sich zwei Magnetventile 46, 47, über die Heißwasser oder Dampf zu dem Milchsystem geleitet werden können.

Das Magnetventil 46 ist über eine Leitung 48 mit der Luftzuleitung 21 verbunden, sodass hierüber Heißwasser zum Spülen des Milchsystems zum Eingang der Milchpumpe 10 geleitet werden kann. Über das Magnetventil 47 kann heißer Wasserdampf hinter dem Durchlauferhitzer 28 in die Milchleitung eingespeist werden, um den im Durchlauferhitzer 28 erwärmten Milchschaum zusätzlich zu erhitzen.

Die in Figur 1 dargestellte Vorrichtung besitzt außerdem eine programmierbare Steuerung 50 und eine mit der Steuerung 50 verbundene Benutzerschnittstelle 51, beispielsweise in Form eines berührungsempfindlichen Displays oder einer anderweitigen Anzeige- und Eingabeeinheit. Über die Steuerung 50 werden die Funktionen der Milchpumpe 10, des Durchlauferhitzers 28 und des Luftventils 22 gesteuert. Außerdem liest die Steuerung 50 Messdaten des Durchflussmessers 16 und des Temperatursensors 30 aus und regelt die Pumpendrehzahl und damit die Pumpleistung der Milchpumpe 10, um eine eingestellte oder vorgegebene Milch- bzw. Milchschaumtemperatur am Ausgang zu erhalten. Außerdem steuert die Steuerung 50 auch das Heißwassersystem, also Wasserpumpe 40 und Durchlauferhitzer 45 sowie die entsprechenden Magnetventile 46 und 47 an, um das Milchsystem nach einem Produktbezug zu spülen oder, falls erforderlich, Heißdampf zur Nacherhitzung auszugebender Milch oder Milchschaums zuzuleiten.

Vorzugsweise können über die Steuerung 50 auch die Funktionen des hier nicht näher dargestellten Kaffeevollautomaten, also die Zubereitung von Kaffeegetränken oder Instantgetränken, gesteuert werden.

Das Milchsystem kann außerdem mit einer automatischen Reinigungs- und Spülvorrichtung ausgestattet sein, wie diese beispielsweise in der WO 2016/020314 A1 beschrieben ist, um das Milchsystem gelegentlich mit einer Reinigungslösung durchzuspülen und zu desinfizieren.

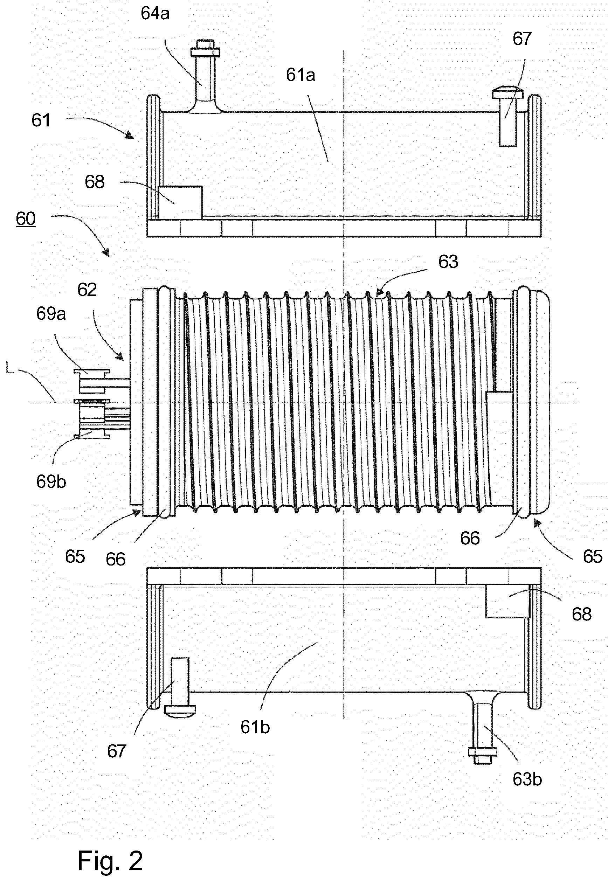

In Figur 2 ist ein Durchlauferhitzer 60 dargestellt, der als Durchlauferhitzer 28 zum Erwärmen von Milchschaum in der in Figur 1 dargestellten Vorrichtung verwendet werden kann. Der Durchlauferhitzer 60 besitzt eine zylindrische Außenhülle 61, die aus zwei Halbschalen 61a, 61b zusammengesetzt ist. Im Inneren der hohlzylindrischen Außenhülle 61 ist ein zylindrischer Innenkörper 62 angeordnet, dessen Mantelfläche eine wendelförmig verlaufende Nut 63 aufweist, die zusammen mit der Außenhülle 61 einen Strömungskanal für eine durch den Durchlauferhitzer 60 strömende Flüssigkeit bildet. An der Außenhülle 61 sind Anschlussstutzen 64a, 64b zum Anschluss von Schlauchleitungen ausgebildet, die mit dem wendelförmig verlaufenden Strömungskanal 63 kommunizieren. Zu den Stirnseiten hin ist an dem Innenkörper 62 auf beiden Seiten jeweils ein ringförmiger Bund 65 ausgebildet. Dieser weist jeweils eine Ringnut auf, in die ein O-Ring 66 eingesetzt ist, der den Innenkörper 62 gegenüber der Außenhülle 61 abdichtet. Die beiden Halbschalen 61a, 61b werden um den Innenkörper 62 gelegt und mithilfe von Schrauben 67 miteinander verbunden, die in jeweils an der gegenüberliegenden Halbschale angeordneten Gegengewinden 68 eingeschraubt werden. An der linken Stirnseite des Innenkörpers 62 sind elektrische Kontakte 69a, 69b angeordnet, über die eine im Inneren des Innenkörpers befindliche elektrische Heizung angeschlossen wird.

Der äußere Mantel des Innenkörpers 62 besteht im Ausführungsbeispiel aus Edelstahl, die zweiteilige Außenhülle aus einem lebensmittelgeeigneten Kunststoff. Als Heizung im Inneren des Innenkörpers dient ein elektrischer Heizwendel, der um einen Keramikkörper gewunden ist. Zwischen Heizwendel und Edelstahlmantel des Innenkörpers 62 kann ein pulverförmiges Material wie etwa Magnesiumoxid gefüllt und verdichtet sein, welches einerseits elektrisch isolierend, andererseits thermisch leitfähig ist.

Der dargestellte Durchlauferhitzer 60 hat einerseits eine sehr kompakte Bauform und kann somit platzsparend verbaut werden, andererseits besitzt er eine geringe thermische Masse, sodass er schnell aufgeheizt werden kann. Durch die zweiteilige Außenhülle 61 kann der Durchlauferhitzer 60 zur Entfernung anhaftender Milchrückstände sehr einfach geöffnet und gereinigt werden.

## Patentansprüche

1. Vorrichtung zum Erzeugen von Milchschaum, mit einer Pumpe (10) zum Fördern von Milch über eine Milchleitung (12) aus einem Vorratsbehälter (14), einem saugseitig der Pumpe (10) in die Milchleitung (12) einmündenden Lufteinlass (20), einem druckseitig der Pumpe (10) angeordneten Druckerhöhungselement (26) und einem in Flussrichtung hinter dem Druckerhöhungselement (26) angeordneten, elektrisch beheizten Durchlauferhitzer (28) zum Erwärmen eines von der Pumpe (10) geförderten Milch/Luft-Gemischs, wobei die Vorrichtung eine Steuerungseinrichtung (50) aufweist, welche ausgebildet ist, eine Ausgabetemperatur des Milchschaums einzustellen, wobei die Einstellung der Ausgabetemperatur durch Einstellen der Förderleistung der Pumpe (10) erfolgt,
wobei die Vorrichtung mindestens einen Temperatursensor (30) zur Messung der Temperatur der angesaugten Milch oder des erwärmten Milch-/Luft-Gemischs aufweist und die Steuerung ausgebildet ist, aus der Temperatur der angesaugten Milch, der bekannten Wärmekapazität von Milch sowie der Heizleistung des Durchlauferhitzers die zur Erreichung einer voreingestellten Temperatur erforderliche Pumpleistung der Pumpe zu ermitteln und/oder die Temperatur des erwärmten Milchluftgemischs direkt als Regelgröße zur Regelung der Förderleistung der Pumpe zu verwenden.

2. Vorrichtung nach Anspruch 1, wobei der Durchlauferhitzer (28, 60) einen sich symmetrisch entlang einer Längsachse (L) erstreckenden, vorzugsweise zylindrischen Innenkörper (62) umfasst, der eine Heizung aufweist, sowie eine den Innenkörper (62) umgebende Außenhülle (61), und wobei zwischen Innenkörper (62) und Außenhülle (61) ein wendelförmig um den Innenkörper (62) umlaufender und von der Außenhülle (61) begrenzter Strömungskanal (63) für die durchströmende Flüssigkeit ausgebildet ist.

3. Vorrichtung nach Anspruch 1 oder 2, wobei das Einstellen der Förderleistung durch Regelung der Pumpendrehzahl, insbesondere mittels Phasenanschnittsteuerung, erfolgt.

4. Vorrichtung nach einem der vorangehenden Ansprüche, bei der saugseitig der Pumpe (10) ein Durchflussmesser (16) zur Volumenbestimmung von der Pumpe angesaugter Milch angeordnet ist.

5. Vorrichtung nach einem der vorangehenden Ansprüche, wobei die Pumpe (10) als Zahnradpumpe ausgebildet ist.

6. Vorrichtung nach einem der vorangehenden Ansprüche, bei der das Druckerhöhungselement (26) als statischer Mischer, insbesondere Wendelmischer, als Widerstandsdurchlasselement oder als Drossel ausgebildet ist.

7. Vorrichtung nach einem der vorangehenden Ansprüche, bei der der Lufteinlass (20) mit einstellbaren Luftventil (22) versehen ist und die Steuerungseinrichtung (50) ausgebildet ist, die Luftzufuhr in Abhängigkeit der eingestellten Förderleistung der Pumpe (10) zu verändern.

8. Vorrichtung nach einem der vorangehenden Ansprüche, bei der der Lufteinlass mit einem intermittierenden Luftventil (22) versehen ist.

9. Vorrichtung nach Anspruch 8, bei der in Abhängigkeit der eingestellten Förderleistung der Pumpe (10) das Tastverhältnis und/oder die Tastfrequenz des intermittierenden Luftventils (22) eingestellt wird.

10. Vorrichtung nach einem der vorangehenden Ansprüche, bei der die Steuerungseinrichtung (50) ausgebildet ist, zur Ausgabe von kaltem Milchschaum den Durchlauferhitzer (28) auszuschalten und zur Ausgabe von warmem Milchschaum den Durchlauferhitzer (28) einzuschalten.

11. Vorrichtung nach einem der vorangehenden Ansprüche, bei der der Vorratsbehälter (14) in einem Kühlschrank untergebracht ist.

12. Verfahren zum Erzeugen von Milchschaum einstellbarer Temperatur, bei dem mittels einer Pumpe (10) Milch über eine Milchleitung (12) aus einem Vorratsbehälter (14) gefördert wird, bei dem über einen saugseitig der Pumpe (10) in die Milchleitung (12) einmündenden Lufteinlass (20) Luft beigemischt wird, bei dem über ein druckseitig der Pumpe (10) angeordnetes Druckerhöhungselement (26) ein Gegendruck am Ausgang der Pumpe (10) erzeugt wird und bei dem in einem in Flussrichtung hinter dem Druckerhöhungselement (26) angeordneten, elektrisch beheizten Durchlauferhitzer (28) ein von der Pumpe (10) gefördertes Milch/Luft-Gemisch erwärmt wird, wobei zur Einstellung einer Ausgabetemperatur des Milchschaums die Förderleistung der Pumpe (10) verändert wird,
wobei mit mindestens einem Temperatursensor (30) die Temperatur der angesaugten Milch oder des erwärmten Milch-/Luft-Gemischs gemessen wird und aus der Temperatur der angesaugten Milch, dem bekannten Wärmekapazität von Milch sowie der Heizleistung des Durchlauferhitzers die zur Erreichung einer voreingestellten Temperatur erforderliche Pumpleistung der Pumpe ermittelt wird und/oder die Temperatur des erwärmten Milchluftgemischs direkt als Regelgröße zur Regelung der Förderleistung der Pumpe verwendet wird.

## Claims

1. A device for producing milk foam, comprising a pump (10) for conveying milk via a milk line (12) from a storage container (14), an air inlet (20) leading into the milk line (26) on the suction side of the pump (10), a pressure-increasing element (12) arranged on the pressure side of the pump (10) and an electrically heated flow heater (28) arranged in the flow direction behind the pressure-increasing element (26), for heating a milk/air mixture conveyed by the pump (10), wherein the device has a control device (50), which is designed to set an output temperature of the milk foam, wherein the setting of the output temperature occurs by adjusting the delivery rate of the pump (10),
wherein
the device has at least one temperature sensor (30) for measuring the temperature of the sucked milk or the heated milk/air mixture and the control is designed to determine, from the temperature of the sucked milk, the known heat capacity of milk and the heat output of the flow heater, the pump performance required to reach a preset temperature and/or use the temperature of the heated milk/air mixture directly as a control variable to control the delivery rate of the pump.

2. The device according to claim 1, wherein the flow heater (28, 60) comprises a preferably cylindrical inner body (62) extending symmetrically along a longitudinal axis (L), which has a heater, and an outer shell (61) surrounding the inner body (62), and wherein between the inner body (62) and outer shell (61) a flow channel (63) is formed, which surrounds in a spiral form the inner body (62) and is delimited by the outer shell (61) for the fluid flowing through.

3. The device according to claim 1 or 2, wherein the setting of the flow rate occurs by control of the pump speed, in particular by means of phase angle control.

4. The device according to any one of the preceding claims, in which a flow meter (16) is arranged on the suction side of the pump (10) for determining the volume of milk sucked by the pump.

5. The device according to any one of the preceding claims, wherein the pump (10) is designed as a gear pump.

6. The device according to any one of the preceding claims, in which the pressure-increasing element (26) is designed as a static mixer, in particular a spiral mixer, as a resistance passage element or as a throttle.

7. The device according to any one of the preceding claims, wherein the air inlet (20) is provided with an adjustable air valve (22) and the control device (50) is designed to change the air supply as a function of the set delivery rate of the pump (10).

8. The device according to any one of the preceding claims, wherein the air inlet is provided with an intermittent air valve (22).

9. The device according to claim 8, in which the duty ratio and/or the duty frequency of the intermittent air valve (22) is set depending on the set delivery rate of the pump (10).

10. The device according to any one of the preceding claims, in which the control device (50) is designed to switch off the flow heater (28) for the output of cold milk foam and to switch on the flow heater (28) for the output of warm milk foam.

11. The device according to any one of the preceding claims, wherein the storage container (14) is accommodated in a refrigerator.

12. A method for producing milk foam at an adjustable temperature, in which milk is conveyed via a milk line (12) from a storage container (14) by means of a pump (10), in which air is added via an air inlet (20) opening in the milk line (12) on the suction side of the pump (10), in which via a pressure-increasing element (26) arranged on the pressure side of the pump (10), a counterpressure is generated at the outlet of the pump (10) and in which in an electrically heated flow heater (28), arranged in the flow direction behind the pressure-increasing element (26), a milk/air mixture conveyed by the pump (10) is heated, wherein the delivery rate of the pump (10) is changed to adjust the output temperature of the milk foam,
wherein
at least one temperature sensor (30) is used to measure the temperature of the sucked milk or of the heated milk/air mixture and from the temperature of the sucked milk, the known heat capacity of milk as well as the heating capacity of the flow heater, the pump capacity required to reach a preset temperature is determined and/or the temperature of the heated milk air mixture is used directly as a control variable for controlling the delivery rate of the pump.

## Revendications

1. Dispositif de génération de mousse de lait, avec une pompe (10) pour transporter du lait par le biais d'une conduite de lait (12) depuis un réservoir de stockage (14), une entrée d'air (20) débouchant dans la conduite de lait (12) côté aspiration de la pompe (10), un élément d'augmentation de pression (26) agencé côté pression de la pompe (10) et un chauffe-eau instantané (28) chauffé électriquement, agencé dans le sens de flux derrière l'élément d'augmentation de pression (26) pour chauffer un mélange de lait/d'air transporté par la pompe (10), dans lequel le dispositif présente un dispositif de commande (50) qui est configuré afin de régler une température de distribution de la mousse de lait, dans lequel le réglage de la température de distribution est effectué par le réglage du débit de la pompe (10),
dans lequel
le dispositif présente au moins un capteur de température (30) pour mesurer la température du lait aspiré ou du mélange de lait/d'air chauffé, et la commande est configurée afin de déterminer, à partir de la température du lait aspiré, de la capacité thermique connue du lait ainsi que de la puissance de chauffage du chauffe-eau instantané, la puissance de pompe nécessaire de la pompe pour atteindre une température préréglée et/ou utiliser la température du mélange de lait/d'air chauffé directement comme grandeur de régulation pour réguler le débit de la pompe.

2. Dispositif selon la revendication 1, dans lequel le chauffe-eau instantané (28, 60) comprend un corps intérieur (62), de préférence cylindrique, s'étendant symétriquement le long d'un axe longitudinal (L) qui présente un élément de chauffage, ainsi qu'une enveloppe extérieure (61) entourant le corps intérieur (62) et dans lequel un canal d'écoulement (63) entourant en forme de spirale le corps intérieur (62) et délimité par l'enveloppe extérieure (61) pour le liquide s'écoulant est configuré entre le corps intérieur (62) et l'enveloppe extérieure (61).

3. Dispositif selon la revendication 1 ou 2, dans lequel le réglage du débit est effectué en régulant la vitesse de rotation de pompe, en particulier au moyen de la commande de l'angle de phase.

4. Dispositif selon l'une quelconque des revendications précédentes, pour lequel un débitmètre (16) est agencé côté aspiration de la pompe (10) pour déterminer le volume de lait aspiré par la pompe.

5. Dispositif selon l'une quelconque des revendications précédentes, dans lequel la pompe (10) est configurée comme pompe à engrenages.

6. Dispositif selon l'une quelconque des revendications précédentes, dans lequel l'élément d'augmentation de pression (26) est configuré comme mélangeur statique, en particulier mélangeur hélicoïdal, comme élément de passage à résistance ou comme étranglement.

7. Dispositif selon l'une quelconque des revendications précédentes, pour lequel l'entrée d'air (20) est pourvue d'une soupape à air (22) réglable, et le dispositif de commande (50) est configuré afin de modifier l'apport d'air en fonction du débit réglé de la pompe (10).

8. Dispositif selon l'une quelconque des revendications précédentes, pour lequel l'entrée d'air est pourvue d'une soupape à air (22) intermittente.

9. Dispositif selon la revendication 8, pour lequel le rapport cyclique et/ou la fréquence cyclique de la soupape à air (22) intermittente est réglé en fonction du débit réglé de la pompe (10).

10. Dispositif selon l'une quelconque des revendications précédentes, pour lequel le dispositif de commande (50) est configuré afin de mettre hors service le chauffe-eau instantané (28) pour la distribution de mousse de lait froide et de mettre en service le chauffe-eau instantané (28) pour la distribution de mousse de lait chaude.

11. Dispositif selon l'une quelconque des revendications précédentes, pour lequel le réservoir de stockage (14) est logé dans un réfrigérateur.

12. Procédé de génération de mousse de lait de température réglable, pour lequel du lait est transporté au moyen d'une pompe (10) par le biais d'une conduite de lait (12) depuis un réservoir de stockage (14), pour lequel de l'air est mélangé par le biais d'une entrée d'air (20) débouchant dans la conduite de lait (12) côté aspiration de la pompe (10), pour lequel une contre-pression est générée au niveau de la sortie de la pompe (10) par le biais d'un élément d'augmentation de pression (26) agencé côté pression de la pompe (10) et pour lequel un mélange de lait/d'air transporté par la pompe (10) est chauffé dans un chauffe-eau instantané (28) chauffé électriquement, agencé dans le sens de flux derrière l'élément d'augmentation de pression (26), dans lequel le débit de la pompe (10) est modifié pour régler une température de distribution de la mousse de lait,
dans lequel
la température du lait aspiré ou du mélange de lait/d'air chauffé est mesurée avec au moins un capteur de température (30), et la puissance de pompe nécessaire de la pompe pour atteindre une température préréglée est déterminée à partir de la température du lait aspiré, de la capacité thermique connue du lait ainsi que de la puissance de chauffage du chauffe-eau instantané, et/ou la température du mélange de lait/d'air chauffé est utilisée directement comme grandeur de régulation pour réguler le débit de la pompe.
